# EUROPEAN PATENT APPLICATION

(11) **EP 1 201 573 A1**
(43) Date of publication of application: **02.05.2002**
(21) Application number: 00500219.1
(22) Date of filing: 26.10.2000
(51) Int. Cl.: B65G 47/14

(54) **Plastic container positioning machine**

(30) Priority: 28.10.1999 ES 200000098
(71) Applicant: Carrasquer Borda, Francisco, 17000 Gerona (ES)
(72) Inventor: Carrasquer Borda, Francisco, 17000 Gerona (ES)

(57) **Abstract**

Plastic container positioning machine consisting of a set of electromagnetic clutches mounted in planetary form (1) around central gearing (2) fitted to the shaft of a geared motor (3) which drives a rotating disc (4) in the opposite direction to main machine rotation, there being a triple rotating-coaxial joint coupled to the central axis (2) of the positioner's rotating carousel, with rotating funnels having tangentially-adjustable walls (13).

## Description

### SUMMARY

Plastic container positioning machine consisting of a set of electromagnetic clutches mounted in planetary form (1) around central gearing (2) fitted to the shaft of a geared motor (3) which drives a rotating disc (4) in the opposite direction to main machine rotation, there being a triple rotating-coaxial joint coupled to the central axis (2) of the positioner's rotating carousel, with rotating funnels having tangentially- adjustable walls (13).

### PURPOSE OF THE INVENTION

This descriptive report refers to an application for an invention patent relating to a plastic container machine for use as a conveying device capable of situating the containers being transported in a suitable position for subsequent handling by filling, labelling and similar machinery.

The invention enables the positioning of plastic containers whose light weight causes problems with conventional positioning machines. It possesses novel features which allow it to process a high container flow and detect possible positioning faults.

### FIELD OF THE INVENTION

This invention is for application in the industry involved in manufacturing the elements, devices and systems used in the manufacture and handling of plastic containers.

### ANTECEDENTS OF THE INVENTION

It is clear that both the market and legislation applying to containers require them to be suitably labelled. Positioning machines exist which situate a certain number of containers in an appropriate position for subsequent processing by labelling and similar machines.

The positioning devices known to the applicant shows operating deficiencies with plastic containers, due largely to the light weight and great variety of shapes and sizes of such containers, resulting in limited handling speed.

Devices of this type are usually arranged starting out from a circular distributor, provided with rotary movement, and situated at a tangent to a linear conveyor. These positioners have fixed truncated-cone or cylindrical bodies which allow the containers to turn from their flat position in the distributor to the vertical position in which they have to be presented to the linear conveyor.

The devices mentioned show defects when there is a bottleneck or obstruction in the shift from distributor to linear conveyor, causing flattening of subsequent containers which reduces the speed of and may even paralyse the process.

In view of the problems which exist in this field, there is a need for a container positioning device specifically designed and manufactured to work with plastic containers which does not suffer the defects mentioned above.

### DESCRIPTION OF THE INVENTION

The plastic container positioning machine proposed by the invention represents clearly new features within its field of application, with build characteristics which render it capable of working with plastic containers of light weight and highly varied shape and dimensions, and which allow it to position different shapes of containers with reduced element and control alogarithm changeover times.

More specifically, the plastic container positioner consists essentially of a rotating cylindrical container arranged about the vertical axis [o0], or slightly inclined, in which the plastic containers are held, and with a disc at its periphery. This disc is provided with rotary movement in the opposite direction to the cylindrical container and has passing cavities or holes in which the plastic containers are arranged as the two components mentioned perform their particular movements.

These components are driven via a geared motor which acts on the central zone of the cylindrical controller, there being a multiple sliding contact which enables movement, electricity, compressed air or any other transportable fluid to be conveyed from the local distribution network to the interior of the invention.

The invention is equipped with individual funnels comprising cavities or passing holes in the peripheral disc fitted with tangentially self-adjusting walls which prevent rubbing between the plastic container, which turns in common with the central element, and the fixed outer funnel wall.

The containers, individually arranged in vertical position in the cavities in the peripheral disc, are carried from the cylindrical container to a linear conveyor by two or more jointed parts which may be folded down in the opposite direction to that of conveyor travel. This means that in the event of a bottleneck or obstructed flow in the changeover from cylindrical container to linear conveyor, the folding down of this mechanism leaves the plastic container free to fall off the positioning machine without being flattened, so that as the assembly mentioned moves beyond the zone where the obstruction occurred it recovers its position via the operation of suitable elements.

### DESCRIPTION OF THE DRAWINGS

This descriptive report is accompanied by a set of drawings which form part of it and are provided to complement the description as well as aid understanding of the characteristics of the invention. The drawings are of an illustrative and not limiting nature, and show the following:

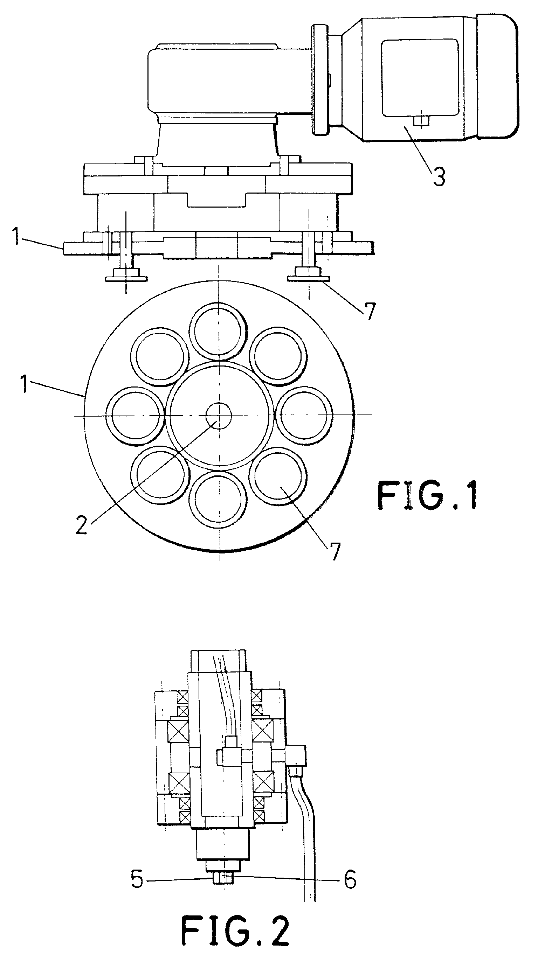

Figure 1.- Shows a schematic plan and side view of he geared motor and sliding contact fitted to the invention constituting a plastic container positioning machine.
Figure 2.- Shows a plan view of the object represented in figure 1.

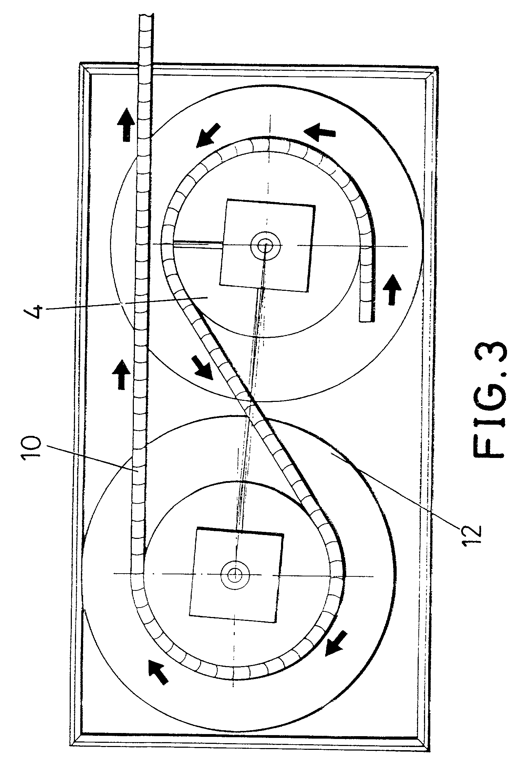

Figure 3.- Represents some containers moving on the linear conveyor, fitted with anti-bottleneck jointed parts.

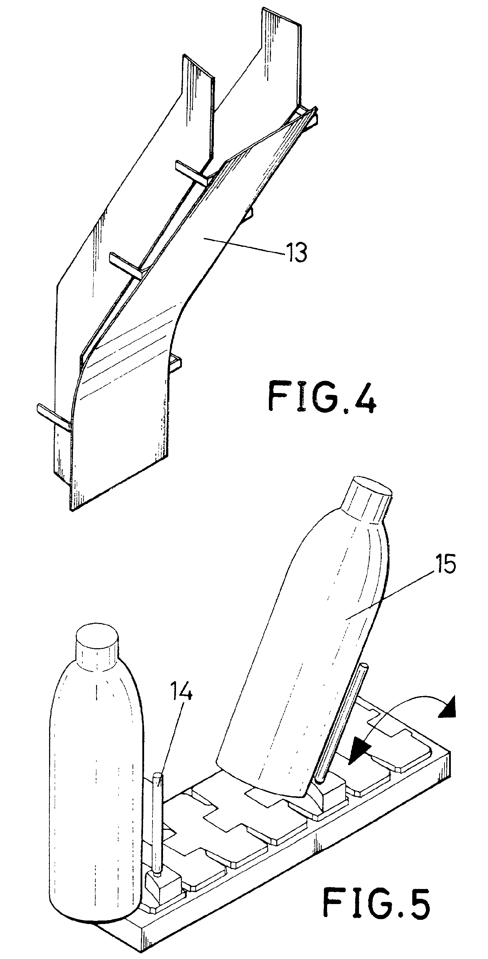

Figure 4.- Shows a perspective view of the integral funnel used in the invention.
Figure 5.- Shows a perspective view of the part constituting the filling line.

### PREFERRED REALISATION OF THE INVENTION

The layout of the plastic container positioning machine proposed by the invention incorporates a planetary mechanism with central gearing (2) coupled to a geared motor (3). There are up to eight satellite gears, each one driving part of the automatic format change, such that any modification in the containers being processed may be carried out without having to stop the plastic container positioning chain.

To carry out these changes in the moving parts of the machine reliably, a multi-purpose joint or multiple sliding contact (5) has been fitted which conducts compressed air, electrical power and digital or analogue signals to these moving parts.

This machine does not need auxiliaries for tandem layouts, as it is a system which operates as a whole (12).

Moreover, it has an integral funnel with a wall which is self-adjustable tangentially (13) to avoid rubbing between the plastic container which turns in common with the central element, and the static outside wall of the funnel.

The invention also includes an anti-bottleneck device to avoid the problems with bottlenecks and obstructed flows which occur with current devices when transferring the plastic containers from the linear conveyor which has collected them from the positioner to an overhead conveyor system which takes the containers by the neck and transfers them to another part of the filling line using compressed air or mechanical means. This anti-bottleneck device comprises an assembly consisting of two or more jointed parts (14) whose design and arrangement allow them to be folded in the opposite direction to that of travel (15). This means that if a problem occurs in transfer between conveyors, there is no successive flattening of the plastic containers in the packing line since the folding down of this container-pushing mechanism leaves the plastic container free to fall to the ground without flattening, the mechanism resuming its normal position when it moves beyond the zone where the obstruction occurred. This prevents costly gradual flattening of containers and consequently having to retain or stop the line to clear the flattened containers away from the transfer zone.

A more extensive description is not needed for any expert on the subject to understand the scope of the invention and the advantages it offers.

The materials, shape, size and layout of elements are liable to change provided there is no alteration to the essence of the invention.
The terms in which this report has been written should not be considered as limiting and must always be taken in their widest sense.

## Claims

1. Plastic container positioning machine **characterised by** being equipped with a set of electromagnetic clutches mounted in planetary form (1) around central gearing (2) which in turn is fitted to the shaft of a geared motor (3) which drives the disc (4) in the opposite direction to main machine rotation, there being a multipurpose triple rotating-coaxial joint (5) coaxially coupled to the central axis (6) and to the central axis (7) of the positioner's rotating carousel, the compressed air or electro-pneumatically operated carousel being controlled by analogue and/or digital signals, with tandem layout and driven by a single geared motor (3).

2. Plastic container positioning machine, as per the first claim, **characterised by** being equipped with a worm-type gear synchronism at entry and an integral funnel fitted with a wall (13) which is self-adjustable tangentially.

3. Plastic container positioning machine, as per the first claim, **characterised by** being equipped with an anti-bottleneck device consisting of two or more jointed parts (14) capable of folding down in the opposite direction to that of travel (15).
